(19) Europäisches Patentamt / European Patent Office / Office européen des brevets

(11) **EP 2 293 488 B1**

(12) **EUROPEAN PATENT SPECIFICATION**

(45) Date of publication and mention
of the grant of the patent:
**13.01.2021 Bulletin 2021/02**

(51) Int Cl.:
***H04L 9/06*** (2006.01)

(21) Application number: **10165439.0**

(22) Date of filing: **09.06.2010**

(54) **Method for cryptographic processing of data units**

KRYPTOGRAPHISCHES DATENVERARBEITUNGSVERFAHREN

PROCEDE DE TRAITEMENT CRYPTOGRAPHIQUE DE DONNEES

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **04.09.2009 FR 0956053**

(43) Date of publication of application:
**09.03.2011 Bulletin 2011/10**

(73) Proprietor: **IDEMIA France
92400 Courbevoie (FR)**

(72) Inventors:
• **Prouff, Emmanuel
75018 Paris (FR)**
• **McEvoy, Robert
Cork (IE)**

(74) Representative: **Santarelli
49, avenue des Champs-Elysées
75008 Paris (FR)**

(56) References cited:
**WO-A1-02/03605    US-B1- 6 278 783**

• **EMMANUEL PROUFF, ROBERT MCEVOY: "First-Order Side-Channel Attacks on the Permutation Tables Countermeasure", CRYPTOGRAPHIC HARDWARE AND EMBEDDED SYSTEMS - CHES 2009, SPRINGER BERLIN HEIDELBERG, BERLIN, HEIDELBERG, [Online] vol. 5747, 28 August 2009 (2009-08-28), pages 81-96, XP019128085, ISBN: 978-3-642-04137-2 Springer online Retrieved from the Internet: URL:http://www.springerlink.com/content/34 76257h56458007/fulltext.pdf> [retrieved on 2010-06-16]**
• **J.-S. CORON: "A New DPA Countermeasure Based on Permutation Tables", 10 September 2008 (2008-09-10), SECURITY AND CRYPTOGRAPHY FOR NETWORKS; [LECTURE NOTES IN COMPUTER SCIENCE], SPRINGER BERLIN HEIDELBERG, BERLIN, HEIDELBERG, PAGE(S) 278 - 292, XP019104377, ISBN: 978-3-540-85854-6 * the whole document ***

## Description

The present invention concerns a method for cryptographic processing of data units, in particular to protect them against side channel analysis (SCA) attacks, in particular differential power analysis (DPA) attacks, and an associated device. It applies in particular to protecting contents to be kept secret or electronic circuits and microcircuit cards.

In some data processing methods, in particular in the context of cryptographic data processing, the processing algorithms use data that must remain secret (for example cryptographic keys) to ensure that the system operates with the required security. These types of methods are the target for attacks by malicious users seeking to outsmart the security features of the system.

When a cryptographic algorithm is implemented in hardware or in an embedded program, information relating to intermediate variables can "leak" during processing. This information can be present in electrical power consumption, electromagnetic emissions or time characteristics. The SCA class of attacks attempts to exploit these leaks to retrieve secret information (generally a secret key or key bits).

The DPA attack obtains information on the secret key (contained in a smart card, for example) by performing a statistical analysis of records of electrical power consumption measured over a large number of calculations using the same key. This type of attack does not require any knowledge of the individual electrical power consumption of each instruction or the position in time of each instruction. It is applied in exactly the same way once the attacker knows the outputs of the algorithm and the corresponding power consumption curves.

A known generic countermeasure separates all the intermediate variables (Suresh Chari, Charantjit S. Jutla, Josyula R. Rao and Pankaj Rohatgi, "Towards Sound Approaches to Counteract Power-Analysis Attacks", Proceedings of Advances in Cryptology - CRYPTO'99, Springer-Verlag, 1999, pages 398-412). This general method greatly increases the resources necessary in terms of memory space and/or calculation time. Moreover, the intermediate steps can also suffer DPA attacks, and the variables must therefore be separated over all steps of the algorithm. This exacerbates the problem of additional resource consumption, in particular for embedded systems such as smart cards.

A general countermeasure masks all inputs and outputs of each elementary operation executed by the microprocessor, i.e. combines them with a mask m. To protect against side channel analysis (SCA) attacks and in particular differential power analysis (DPA) attacks, it is known to use additive masking whose equation is
X XOR m
where X is the Galois field $GF(2^8)^{16}$,
XOR is the exclusive-OR function that associates with a pair (0,0) the value 0, with the pair (0,1) the value 1, with the pair (1,0) the value 1 and with the pair (1,1) the value 0, and
m is a random number.

Note that when a bit of m has the value 1 the value of the corresponding bit of X is inverted on masking and when a bit of m has the value 0 the value of the corresponding bit of X remains the same on masking. This amounts to stating that (X XOR m) XOR m = X. Thus demasking is effected by the same operation as masking.

If the source of random numbers is uniformly distributed, the data resulting from masking is likewise and no longer depends on the secret key.

The paper by J.-S. Coron "A new DPA countermeasure based on permutation tables" in "Security and cryptography for networks", 6th international conference SCN 2008, volume 5229 in "Lecture Notes in Computer Science", pages 278, 292, Springer 2008, proposes a countermeasure using permutation tables. This proposal can be seen as a generalization of the standard approach, masking no longer being effected by random translation but by random permutation. As in standard masking, the countermeasure using permutation tables necessitates a random data string, which is used at the beginning of the algorithm to generate a permutation P. In the case of the encryption algorithm, the permutation P is applied both to the message X to be encrypted and to the secret key K, to produce P(X) and P(K). The encryption algorithm uses these permutated variables. In each step of the encryption algorithm, the cryptographic operations must be modified so that all the intermediate variables remain in the permutated form defined by the permutation P.

In the AES context, the intermediate variables are words of eight bits. The permutation P includes two permutations of four bits, $P_1$ and $P_2$, and is applied to a variable X of eight bits, or bytes, according to the following formula, in which $X_h$ and $X_l$ respectively represent the MSB half-byte and the LSB half-byte of the byte X and "||" represents concatenation:

$$P(X) = P_2(X_h) \,||\, P_1(X_l).$$

Each time the algorithm is called, the permutations $P_1$ and $P_2$ are chosen randomly in a set of permutations defined on $F_2^4$, set of four bits, also denoted by $GF(2)^4$. In the remainder of the description, it is assumed that the random variable $P_1$ (respectively $P_2$) associated with the random generation of $p_1$ (respectively $p_2$) satisfies the condition whereby the probability that the event $P_1 = p_1$ is equal to $2^{-4d}$ (respectively the probability that $P_2 = p_2$ is equal to $2^{-4d}$), d being an integer (typically d = 4), for each value of $p_1$ (respectively P2).

The AES standard is a well-known block encryption algorithm. The AES round function for encryption operates on elements of 16 bytes $a_i$ with i running from 0 to 15, and consists of four transformations: AddRoundKey, SubBytes, ShiftRows and MixColumns.

Hereinafter, the use of permutations in the AES context is referred to as "randomized AES", the term "randomized" added at the start of an operation or transformation indicating that it operates on permutated data. After the random permutation has been generated, it is applied to each byte of the message and the key. For each byte x, $u = P(x)$ denotes the representation of x by the permutation P.

Each permutated value is processed by the AES round function, in which it is subjected to the transformation indicated above. Each of the AES transformations must be scrupulously implemented so that:

- the sensitive variables always appear in their form permutated by P, and
- the output of each transformation is a permutated form.

Implementations of AddRoundKey and MixColumns are given below:

- randomized AddRoundKey takes two bytes $u = P(x)$ and $v = P(y)$ as input and supplies as output $P(x\ XOR\ y)$ where XOR represents the exclusive-OR operation. To this end, two tables with input on 8 bits and output on 4 bits are defined for $(u_l, v_l)$ and $(u_h, v_h)$ in $(F_2^4)^2$:

$$XT_4^{1}(u_l \parallel v_l) = p_1(p_1^{-1}(u_l)\ XOR\ p_1^{-1}(v_l))$$

$$XT_4^{2}(u_h \parallel v_h) = p_2(p_2^{-1}(u_h)\ XOR\ p_2^{-1}(v_h))$$

where $p_1$ and $p_2$ are such that $P(X) = p_1(x_l)\|p_2(x_h)$ and "$p_x^{-1}$" denotes the inverse permutation of permutation "$p_x$".

The tables $XT_4^1$ and $XT_4^2$ are calculated at the same time as P and stored in memory. An XOR function on eight bits $XT_8$ is then calculated using look-up tables (LUT) for u and v in $F_2^8$.

$$XT_8(u,v) = XT_4^{2}(u_h \parallel v_h) \parallel XT_4^{1}(u_l \parallel v_l).$$

- Randomized MixColumns is calculated as a combination of multiplication-by-two operations, and XOR operations. To calculate randomized MixColumns from $P(a_i)$, the representation of the bytes as permutated by P, the XOR operations are calculated using the function $XT_8$. For the multiplication-by-two operation, a function $D_2$ is defined such that, when it is applied to $u = P(x)$, $D_2(P(x)) = P(\{'02\} . x)$ is obtained, where {.} represents hexadecimal notation and "." represents multiplication modulo $x^4 + 1$. The permutated representation of the first byte of the output of MixColumns is calculated as follows:
$P(a_0^{new}) = XT_8\ (D_2(a'_0),\ XT_8(D_2(a'_1),\ XT_8(a'_1,\ XT_8(a'_2,\ a'_3))))$ in which formula $a'_i$ represents the representation of $a_i$ permutated by P. The other bytes in the outputs of randomized MixColumns can be calculated similarly, using $XT_8$ and $D_2$.

At the end of the last round, the inverse permutation $P^{-1}$ is applied to each byte of the current result, to reveal the encrypted message.

The inventors have determined that this randomized AES is vulnerable, in particular because two identical data units produce two identical permutated data units.

An analysis of this randomized AES by the inventors is available in the publication *"First-Order Side-Channel Attacks on the Permutation Tables Countermeasure"*.

The present invention aims to remedy this drawback.

Document WO 02/03605 discloses substitution-box, also known as S-box, used in a cryptographic round operation. Several S-boxes are used in parallel to 4-bit sub-blocks of input data to perform a non-linear operation based on randomly-selected permutations.

To remedy to the above drawback, according to a first aspect, the invention provides a method for cryptographic processing of data units as defined in Claim 1

Thus two identical data units are rendered different by the permutation step, which reduces the level of vulnerability referred to above. According to particular features, the method of the present invention further includes a step of decomposition of each of said data units into data unit parts, each data unit part including a plurality of elementary data units, and, during the permutation step, different permutations are effected for the same parts of said data units.

The quantity of memory necessary for processing the data units is much smaller with separate processing of the data unit parts than if the data unit itself were processed because of the routine use of look-up tables to implement operations. For example, processing two bytes would necessitate a look-up table with $2^{16}$ binary inputs, which is not compatible with the quantities of memory available, in particular in portable electronic units.

According to particular features, the permutation step includes:

- a first permutation step during which the same permutation is applied to the different data units, and
- a second permutation step during which different permutations are applied to the different data units.

According to particular features, the permutation step includes:

- a first step of permutation of the data units during which a first permutation is applied to a first part of each of the data units and a second permutation, different from the first permutation, is applied to a second part of each of the data units, the first and second permutations being different, and

- a second permutation step during which the second permutation is applied to the first part of one of the data units after the inverse permutation of the first permutation, and the first permutation is applied to the second part of said data units after the inverse permutation of the second permutation.

Thus only a small number of permutations and look-up tables are used, which reduces the processing time and memory space resources necessary for implementing the present invention.

According to particular features, said permutations are statistically independent.

These features eliminate the level 1 vulnerabilities referred to above.

According to particular features, at least one cryptographic operation includes a step of concatenating the data unit parts. Thus the output data units of the cryptographic operations are restored on the basis of the parts of the output data units.

According to particular features, at least one cryptographic operation uses a look-up table for each data unit part, the input side of which receives said part of two permutated data units and provides said part of an output data unit.

Using look-up tables speeds up processing, because simply reading their outputs provides the result of the calculations, and also reduces vulnerability, because there are no intermediate steps that could risk giving information to an attacker.

According to particular features, at least one cryptographic operation applied to the permutated data units includes an exclusive-OR operation.

According to particular features, at least one cryptographic operation applied to the permutated data units is an encryption algorithm.

According to particular features, at least one cryptographic operation applied to the permutated data units is an AES encryption algorithm.

Thus, the present invention applies in particular to AES (Advanced Encryption Standard) coding and exploits its advantages, in particular in terms of consumption of resources, with modifications limited to those necessary to implement the randomized AES algorithm.

According to a second aspect, the present invention provides a device for cryptographic processing of secret data as defined in Claim 10.

Such a device can be a pocket electronic unit, such as a microcircuit card, for example one conforming to the ISO 7816 standard. Alternatively, it can be some other type of electronic unit, for example a computer (such as a personal computer) or a USB key.

The method and device referred to above are typically implemented by a microprocessor executing instructions of a computer program. Thus, executing these instructions enables the microprocessor to process data stored in the device, for example in a random-access memory thereof. Other embodiments can nevertheless be envisaged, for example using an application-specific integrated circuit to execute the steps of the methods referred to above.

In these various contexts, the input data can be data received by the processing device from an external device, for example by means of a communication interface of the processing device. It can instead consist of data stored in the device (for example in non-volatile memory) or intermediate data obtained from result data of another transformation.

Similarly, at least some of the result data can be data to be sent to the output of the device, for example to be sent to the external device via the communication interface. The result data can nevertheless be only intermediate data, possibly used by the device in subsequent processes (for example calculation processes).

Each of the cryptographic algorithms mentioned above is used for example to provide at least part of an encryption, decryption, signature, cryptographic key exchange or cryptographic key generation operation.

In this type of application, the input data is, for example, a message (or part of a message) received from the external device and that is encrypted (or decrypted) in the processing device by means of the cryptographic algorithm or algorithms mentioned above and then forwarded via the communication interface at the output of the processing device.

According to a third aspect, the invention provides a computer program including instructions for executing the method of the present invention when said instructions are executed by a processor.

According to a fourth aspect, the present invention provides an information medium containing instructions for executing the method of the present invention when said instructions are executed by a processor.

The advantages, aims and particular features of this device, this computer program and this information medium being similar to those of the method of the present invention, they are not set out here.

Other particular advantages, aims and features of the present invention will emerge from the following description given, by way of nonlimiting explanation, with reference to the appended drawings, in which:

- figure 1 represents diagrammatically the main elements of one particular embodiment of a microcircuit card;
- figure 2 represents the general physical appearance of the microcircuit card illustrated in figure 1;
- figure 3 represents diagrammatically the prior art randomized AES algorithm;
- figure 4 represents, in flowchart form, steps for executing a first particular embodiment of the method of the present invention; and

- figure 5 represents, in flowchart form, steps for executing a second particular embodiment of the method of the present invention.

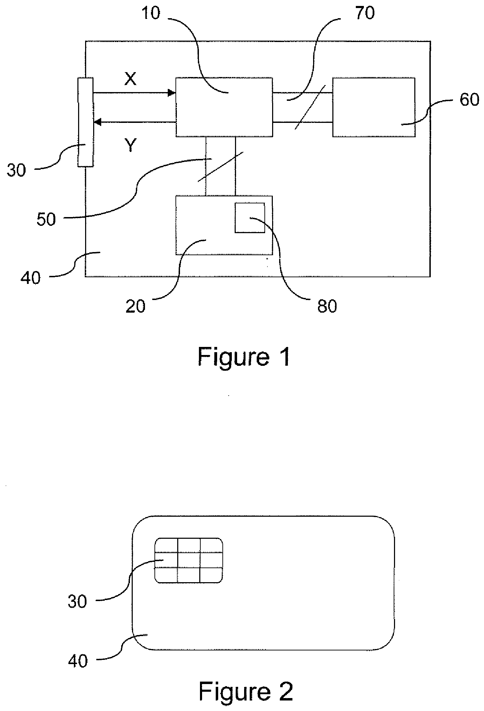

Figure 1 represents diagrammatically a data processing device 40 in which the present invention is implemented. This device 40 comprises a microprocessor 10 with which are associated on the one hand, for example by means of a bus 70, a random-access memory 60 and on the other hand, for example by means of a bus 50, a non-volatile memory 20 (for example of the EEPROM type).

The data processing device 40, to be precise its microprocessor 10, can exchange data with external devices via a communication interface 30.

There is represented diagrammatically in figure 1 the transmission of an input data unit X received from an external device (not shown) and forwarded from the communication interface 30 to the microprocessor 10. There is similarly shown the transmission of an output data unit S from the microprocessor 10 to an external device via the communication interface 30. This output data unit Y is the result of processing by the microprocessor 10 of data, generally the input data unit X, using secret data 80 internal to the system, for example a private key.

Although, for the purposes of illustration, the input data and the output data are shown on two different arrows, the physical means enabling communication between the microprocessor 10 and the interface 30 can take the form of a single unit, for example a serial communication port or a bus.

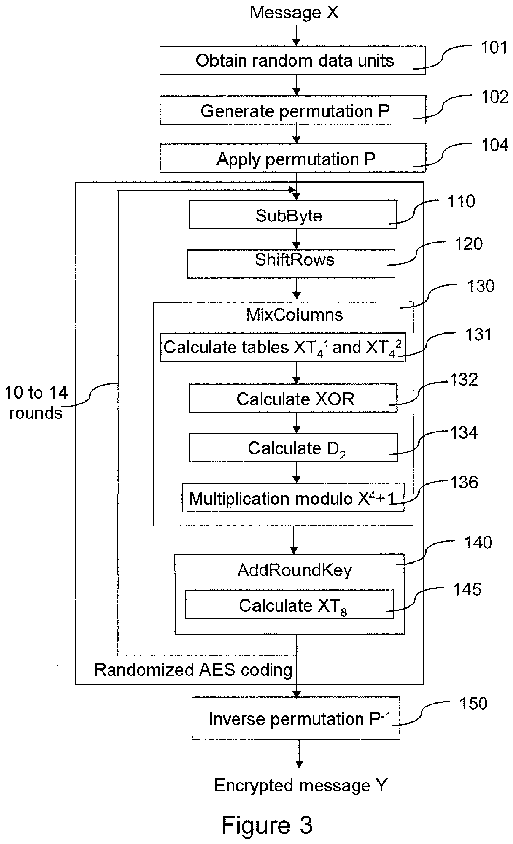

The microprocessor 10 is adapted to execute software (or a computer program) that enables the data processing device 40 to execute a method of the invention, examples of which are described with reference to figures 3 to 5. The software consists of a series of command instructions to the microprocessor 10 that are stored in the memory 20, for example.

Alternatively, the combination of the microprocessor 10, the non-volatile memory 20 and the random-access memory 60 can be replaced by an application-specific integrated circuit including means for executing the various steps of the data processing method.

Figure 2 represents a microcircuit card that constitutes one example of a data processing device of the invention as shown in figure 1. In this case the communication interface 30 is provided by the contacts of the microcircuit card. The microcircuit card incorporates a microprocessor 10, a random-access memory 60 and a non-volatile memory 20 as shown in figure 1.

This microcircuit card conforms for example to the ISO 7816 standard and is provided with a secure microcontroller that combines the microprocessor (or CPU) 20 and the random-access memory 60.

Alternatively, the data processing device can be a USB key, a paper document or a paper information medium incorporating in one of its sheets a microcircuit associated with contactless communication means. This device is preferably a portable or pocket electronic unit.

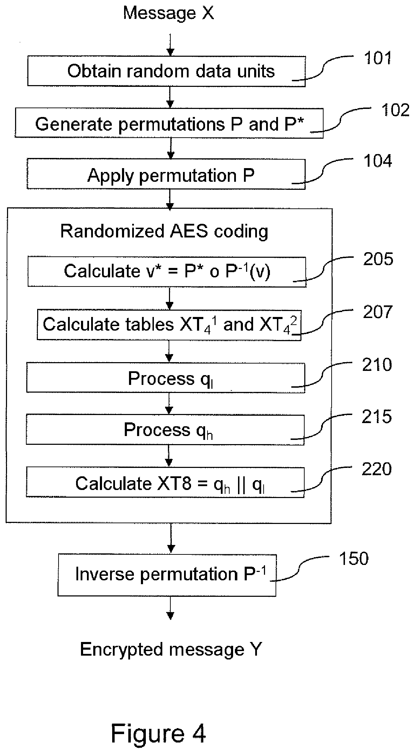

An example of the method of the invention applied to AES type symmetrical cryptographic processing during which the microprocessor 10 encrypts a message X to produce an encrypted message Y is described next with reference to figures 3 and 4.

Figure 3 shows diagrammatically the randomized AES algorithm that takes as input a block of 16 bytes of the message to be processed: $X = (x_i)_{i=0...15} \in GF(2^8)^{16}$.

The randomized AES algorithm executes a series of rounds, generally 10, 12 or 14 rounds, comprising the individual transformations represented in figure 3. The AES algorithm on which the randomized AES algorithm is based is a symmetrical encryption algorithm that takes as input a message X in the form of a block of 128 bits (16 bytes) and a key of 128, 192 or 256 bits.

The four principal steps of a round of the AES algorithm are:

- a non-linear (bit-by-bit addition) operation SubByte 110 of substitution of each byte $x_i$ using an S-Box,
- a linear cyclic transposition operation ShiftRows 120,
- a linear matrix product operation MixColumns 130, and
- a linear operation AddRoundKey 140 of combining each byte with a round key.

Accordingly, the 16 input bytes are permutated in accordance with a predefined table during the transformation SubByte 110. These bytes are then placed in a 4x4 matrix and its rows subjected to a rightward translation by an increment that is variable as a function of the row during the transformation ShiftRows 120.

A linear transformation MixColumns 130 is then applied to the matrix in the form of binary multiplication of each element of the matrix with polynomials taken from an auxiliary matrix, this multiplication being subject to special rules according to the Galois group $GF(2^8)$, or finite body.

An intermediate matrix is then obtained by applying an XOR function to the matrix and another matrix linked to the round key.

These operations are repeated several times and define a "round". For a key of 128, 192 or 256 bits, AES respectively necessitates 10, 12 or 14 rounds.

The operations SubByte 110 and ShiftRows 120 can be carried out in the opposite order to that shown in figure 3 without impacting on the algorithm.

These steps are defined in the AES standard and are therefore not described in detail here except for what is relevant to the present invention.

In the randomized AES version, each of these steps is modified to take account of a random permutation. These various modified steps are defined in the paper by J.-S. Coron cited above.

As in standard masking, the countermeasure using permutation tables necessitates a random data string, obtained during a step 101, that is used at the beginning of the algorithm to generate a permutation P during a step 102. In the case of the encryption algorithm, during a step 104, the permutation step P is applied both to the message X to be encrypted and to the secret key K, to produce P(X) and P(K). These are permutated variables that are used by the encryption algorithm.

During subsequent steps of the encryption algorithm, the cryptographic operations are modified so that all the intermediate variables remain in the permutated form defined by the permutation P.

In the AES context, the intermediate variables are words of eight bits. The permutation P includes two permutations $P_1$ and $P_2$ of four bits and operates on a variable X of eight bits, or bytes, in accordance with the following formula, in which $X_h$ and $X_l$ respectively represent the most significant half-byte and the least significant half-byte of the byte X and '||' represents concatenation:

$$P(X) = P_2(X_h) \;||\; P_1(X_l).$$

Each time the algorithm is called, the permutations $P_1$ and $P_2$ are chosen at random in a set of permutations defined on $F_2^4$. In the remainder of the description it is assumed that the random variable $P_1$ (respectively $P_2$) associated with the random generation of $p_1$ (respectively $p_2$) satisfies the condition whereby the probability that the event $P_1 = p_1$ is equal to $2^{-4d}$ (respectively the probability that $P_2 = p_2$ is equal to $2^{-4d}$), d being an integer (typically d = 4) for each value of $p_1$ (respectively $p_2$).

After the random permutation has been generated, it is applied to each byte of the message and the key. For each byte x, u = P(x) denotes the representation of x by the permutation P.

Each permutated value is processed by the AES round function, in which it is subjected to the above transformations 110, 120, 130 and 140. Each of the AES transformations must be rigorously implemented so that:

- the sensitive variables always appear in their form permutated by P, and
- the output of each transformation is in a permutated form.

Implementations of randomized AddRoundKey 140 and randomized MixColumns 130 are given below by way of example, it being understood that SubByte and ShiftRows can also be adapted to execute the present invention with the level of vulnerability reduced or even eliminated.

Randomized AddRoundKey 140 takes two bytes u = P(x) and v = P(y) as input and supplies as output P(x XOR y) where XOR represents the exclusive-OR operation. To this end, two tables $XT_4^1$ and $XT_4^2$ with inputs on 8 bits and outputs on 4 bits are defined for $(u_l, v_l)$ and $(u_h, v_h)$ in $(F_2^4)^2$:

$$XT_4^1(u_l \;||\; v_l) = p_1(p_1^{-1}(u_l) \; XOR \; p_1^{-1}(v_l))$$

$$XT_4^2(u_h \;||\; v_h) = p_2(p_2^{-1}(u_h) \; XOR \; p_2^{-1}(v_h)).$$

The tables $XT_4^1$ and $XT_4^2$ are calculated in parallel with P during a step 131 (see the description of Randomized MixColumns hereinafter) and stored in memory. An XOR function on eight bits $XT_8$ is then calculated during a step 145 using look-up tables (LUT) for u and v in $F_2^8$.

$$XT_8(u,v) = XT_4^2(u_h \;||\; v_h) \;||\; XT_4^1(u_l \;||\; v_l).$$

Randomized MixColumns 130 is calculated as a combination of multiplication-by-two operations, and XOR operations. To calculate Randomized MixColumns from $P(a_i)$, the representation of the bytes permutated by P, the XOR operations are calculated, using the function $XT_8$, during a step 132. A function $D_2$ is defined during a step 134 such that, when it is applied to u = P(x) during the step 136 of multiplication by two, $D_2(P(x)) = P(<\{02\} . x)$ is obtained, where {.} represents hexadecimal notation and "." represents multiplication modulo $x^4 + 1$. The permutated representation of the first byte of the output of Randomized MixColumns 130 is calculated as follows: $P(a_0^{new}) = XT_8 \, (D_2(a'_0), \, XT_8(D_2(a'_1), \, XT_8(a'_1, \, XT_8(a'_2, a'_3))))$ In the above formula $a'_i$ represents the representation of $a_i$ permutated by P. The other bytes in the outputs of randomized MixColumns are calculated in a similar way using $XT_8$ and $D_2$.

At the end of the last round, the inverse permutation $P^{-1}$ is applied to each byte of the current result during a step 150 to reveal the encrypted message.

As shown in figure 4, the countermeasure of the present invention consists in a new implementation of the secure function $XT_8$. As in the prior art described above, two tables $XT_4^1$ and $XT_4^2$ going from eight bits to four bits are used, different from those described with reference to figure 3. However, before applying them to the half-bytes of data u(=P(x)) and v(=P(y)) to be combined using the XOR function, during preliminary steps 205 to 220, the representation P(y) of y permutated by P is exchanged for another, P*(y).

This change is effected by accessing the look-up table for the function P* o $P^{-1}$. Like the permutation P, the permutation P* is defined by two permutations $p_1^*$ and $p_2^*$ such that $P^*(x) = p_2^*(x_h) \;||\; p_1^*(x_l)$. For security reasons, $p_1^*$ and $p_2^*$ must be independent of $p_1$ and $p_2$, respectively.

The two new tables $XT_4^1$ and $XT_4^2$ are defined during a step 231 that replaces the step 131 described with reference to figure 3, as follows:

$$XT_4^1(u_l, v_l) = p_1(p_1^{-1}(u_l) \text{ XOR } p_1^{*-1}(v_l))$$

$$XT_4^2(u_h, v_h) = p_2(p_2^{-1}(u_h) \text{ XOR } p_2^{*-1}(v_h)).$$

Accordingly, the new XOR function $XT_8$ on eight bits is defined with reference to these tables such that, for u and v in $F_2^8$:

$$XT_8(u,v) = XT_4^2(u_h, v_h) \,||\, XT_4^1(u_l, v_l).$$

Consequently the following secure implementation of P(x XOR y) is used based on the permutated representations u = P(x) and v = P(y):

In a step 205, $v^* = P^* \text{ o } P^{-1} [v]$ is calculated.
In a step 210, $q_l = XT_4^1 (u_l, v_l^*)$ is processed.
In a step 215, $q_h = XT_4^2 (u_h, v_h^*)$ is processed.
In a step 220, $XT_8 (u, v) = q_h \,||\, q_l$ is calculated.

Since $p_1$ and $p_2$ are statistically independent permutations, it is possible to choose $P^* = p_1 \,||\, p_2$ without reducing the level of security against a first order SCA attack. In particular, p* can simply be defined on the basis of $P = p_2 \,||\, p_1$ by interchanging the roles of $p_1$ and $p_2$. With such a construction, the security method of the present invention requires no additional random permutation other than those already involved in the definition of the permutation P. Moreover, in this case, calculating $P^* \text{ o } P^{-1} [v]$ consists in processing $p_1 \text{ o } p_2^{-1}(V_h)$ and $p_2 \text{ o } p_1^{-1}(v_l)$. Compared to the implementation of $XT_8$ proposed in the prior art, the secure implementation of the present invention requires only one additional access to a look-up table and to two additional tables of 16 bytes that store the functions $p_2 \text{ o } p_1^{-1}$ and $p_1 \text{ o } p_2^{-1}$.

Moreover, these additional tables make it possible, without using additional memory, to optimize processing time and memory use in the randomized AES implementation described in the prior art document cited above.

This is because $p_2 \text{ o } p_1^{-1}$ and $p_1 \text{ o } p_2^{-1}$ are the tables $p_{21}$ and $p_{12}$ proposed in that document for calculating non-linear functions known as S-boxes in the function MIT (MIT standing for "Multiplicative Inverse Transformation"), to to achieve good time/memory tradeoff. Consequently, no additional memory space is necessary for conjointly implementing this particular embodiment of the present invention and this optimization.

The present invention is not limited to transformations of the AES symmetrical cryptographic algorithm, and can be applied to any type of algorithm, including DES and IDEA NXT (also known as FOX).

In a similar way to AES, FOX executes a number of rounds of operations, including a non-linear operation muX.

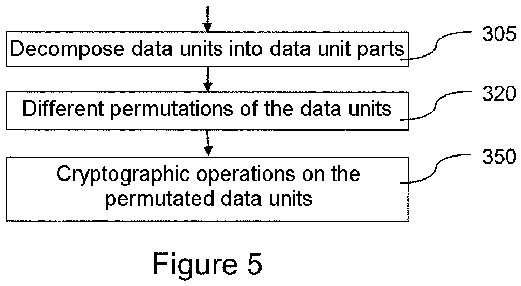

As shown in figure 5, in a second particular embodiment of the present invention, the method of cryptographic processing of data units u and v includes:

- a permutation step 320 during which permutation is effected of the elementary data units of each data unit u and v by applying different permutations to the elementary data units of u and the elementary data units of v that are preferably statistically independent, and
- at least one cryptographic operation 350 applied to the permutated data units.

Note that here the expression "elementary data units" primarily refers to binary data, i.e. bits, but can also represent n-tuples of bits, not necessarily consecutive in the data, for example pairs, triplets or quadruplets of bits, each data unit including a plurality of elementary data units.

In some embodiments, for example that shown in figure 4, the method further includes a step 305 of decomposing each of the data units into data unit parts, each data unit part including a plurality of elementary data units. In the example represented in figure 4, these data unit parts are most significant half-bytes and least significant half-bytes.

In this case, during the permutation step 320, it is preferable to effect a different permutation for the same parts of the data units u and v, for example $p_1$ and $p_2$ for the parts of u and $p_2$ and $p_1$ for the corresponding parts of v. Where the parts of v are concerned, this permutation is effected by means of $p_2 \text{ o } p_1^{-1}$ and $p_1 \text{ o } p_2^{-1}$. Accordingly, in the preferred embodiment described with reference to figure 4, the permutation step includes:

- a first step of permutation of the data units u and v during which a first permutation $p_1$ is applied to a first part of each of the data units u and v and a second permutation $p_2$ different from the first permutation $p_1$ is applied to a second part of each of the data units u and v, the first and second permutations being different and preferably statistically independent, and
- a second step of permutation of P(v) into v* during which the second permutation $p_2$ is applied after the inverse permutation $p_1^{-1}$ of the first permutation to the first part of the data unit v and the first permutation $p_1$ is applied after the inverse permutation $p_2^{-1}$ of the second permutation to the second part of the data unit v.

More generally, during the step 320, the permutation can include:

- a first permutation step during which the same permutation is applied to the different data units, and
- a second permutation step during which different permutations are applied to the different data units.

In some embodiments, at least one cryptographic operation 350 includes a step of concatenating the data unit parts.

In some embodiments, at least one cryptographic operation uses a look-up table (the two tables $XT_4^1$ and $XT_4^2$ in the embodiment shown in figure 4) for each data unit part, the input side of which receives said part of two permutated data units and provides said parts of an output data unit.

In some embodiments, in particular that shown in figure 4, at least one cryptographic operation applied to the permutated data units is an operation including an exclusive-OR (XOR) operation.

In some embodiments, in particular that shown in figure 4, at least one cryptographic operation applied to the permutated data units is an encryption algorithm.

In some embodiments, in particular that shown in figure 4, at least one cryptographic operation applied to the permutated data units is an AES encryption algorithm.

**Claims**

1. Processor-based method for block encryption cryptographic processing, that includes the following steps:

   - decomposing (305) each of two data units into data unit parts, each data unit part including a plurality of elementary data units,
   - permutating (104, 205, 320), within each data unit part, elementary data units of that data unit part, and
   - performing at least one block encryption cryptographic operation (220, 350) on the permutated data units by combining corresponding permutated data unit parts of the two permutated data units,

   **characterized in that**, prior to performing said block encryption cryptographic operation, the permutation step includes effecting different permutations to corresponding data unit parts of the two data units to obtain said corresponding permutated data unit parts of the two permutated data units, thereby applying a different permutation (P, P*) to each of the said data units.

2. Method according to claim 1, **characterized in that** the permutation step includes:

   - a first permutation step (104) during which the same permutation (P) is applied to the different data units to obtain permutated data units, and
   - a second permutation step (205) during which different permutations (P, P*) are applied to the different permutated data units.

3. Method according to claim 1 or 2, **characterized in that** the permutation step includes:

   - a first step (104) of permutation of the data units during which a first permutation is applied to a first part of each of the data units to obtain first permutated parts and a second permutation, different from the first permutation, is applied to a second part of each of the data units to obtain second permutated parts, the first and second permutations being different, and
   - a second permutation step (205) during which the second permutation is applied after the inverse permutation of the first permutation to the first permutated part of one of the data units and the first permutation after the inverse permutation of the second permutation is applied to the second permutated part of said one of the data units.

4. Method according to any one of claims 1 to 3, **characterized in that** said permutations are statistically independent.

5. Method according to any one of claims 1 to 4, **characterized in that** at least one block encryption cryptographic operation includes a step of concatenating the data unit parts.

6. Method according to any one of claims 1 to 5, **characterized in that** at least one block encryption cryptographic operation uses a look-up table for each data unit part, the input side of which receives said part of two permutated data units and provides said part of an output data unit.

7. Method according to any one of claims 1 to 6, **characterized in that** at least one block encryption cryptographic operation applied to the permutated data units includes an exclusive-OR operation.

8. Method according to any one of claims 1 to 7, **characterized in that** at least one block encryption cryptographic operation applied to the permutated data units is an encryption algorithm.

9. Method according to any one of claims 1 to 8, **characterized in that** at least one cryptographic operation applied to the permutated data units is an AE S encryption algorithm.

10. Device (40) for block encryption cryptographic processing, that includes:

- decomposing means configured to decompose each of two data units into data unit parts, each data unit part including a plurality of elementary data units,
- permutation means adapted to permutate, within each data unit part, elementary data units of that data unit part, and
- at least one operation means adapted to perform at least one block encryption cryptographic operation on the permutated data units by combining corresponding permutated data unit parts of the two permutated data units,

**characterized in that** the permutation means are adapted to effect different permutations to corresponding data unit parts of the two data units to obtain said corresponding permutated data unit parts of the two permutated data units, thereby applying a different permutation (P, P*) to each of the said data units.

11. Device (40) according to claim 10, that constitutes a pocket electronic unit such as a microcircuit card.

12. Device (40) according to claim 11, that conforms to the IS O 7816 standard.

**Patentansprüche**

1. Prozessorbasiertes Verfahren zur kryptographischen Blockverschlüsselungsverarbeitung, das die folgenden Schritte beinhaltet:

- Zerlegen (305) jeder von zwei Dateneinheiten in Dateneinheitenteile, wobei jedes Dateneinheitenteil eine Vielzahl von elementaren Dateneinheiten beinhaltet,
- Vertauschen (104, 205, 320) innerhalb jedes Dateneinheitenteils von elementaren Dateneinheiten dieses Dateneinheitenteils und
- Durchführen von mindestens einer kryptographischen Blockverschlüsselungsoperation (220, 350) an den vertauschten Dateneinheiten durch Kombinieren von entsprechenden vertauschten Dateneinheitenteilen der zwei vertauschten Dateneinheiten,

**dadurch gekennzeichnet, dass** vor dem Schritt des Durchführens der kryptographischen Blockverschlüsselungsoperation der Schritt des Vertauschens das Vornehmen von unterschiedlichen Vertauschungen bei entsprechenden Dateneinheitenteilen der zwei Dateneinheiten beinhaltet, um die entsprechenden vertauschten Dateneinheitenteile der zwei vertauschten Dateneinheiten zu erhalten, wodurch auf jede der zwei Dateneinheiten eine andere Vertauschung (P, P*) angewendet wird.

2. Verfahren nach Anspruch 1, **dadurch gekennzeichnet, dass** der Schritt der Vertauschung Folgendes beinhaltet:

- einen ersten Schritt der Vertauschung (104), bei dem dieselbe Vertauschung (P) auf unterschiedliche Dateneinheiten angewendet wird, um vertauschte Dateneinheiten zu erhalten, und
- einen zweiten Schritt der Vertauschung (205), bei dem unterschiedliche Vertauschungen (P, P*) auf die unterschiedlichen vertauschten Dateneinheiten angewendet werden.

3. Verfahren nach Anspruch 1 oder 2, **dadurch gekennzeichnet, dass** der Schritt der Vertauschung Folgendes beinhaltet:

- einen ersten Schritt (104) der Vertauschung der Dateneinheiten, bei dem eine erste Vertauschung auf einen ersten Teil von jeder der Dateneinheiten angewendet wird, um erste vertauschte Teile zu erhalten, und eine zweite Vertauschung, die sich von der ersten Vertauschung unterscheidet, auf einen zweiten Teil von jeder der Dateneinheiten angewendet wird, um zweite vertauschte Teile zu erhalten, wobei die erste und die zweite Vertauschung unterschiedlich sind, und
- einen zweiten Schritt (205) des Vertauschens, bei dem die zweite Vertauschung nach der inversen Vertauschung der ersten Vertauschung auf den ersten vertauschten Teil von einer der Dateneinheiten angewendet wird und die erste Vertauschung nach der inversen Vertauschung der zweiten Vertauschung auf den zweiten vertauschten Teil der einen der Dateneinheiten angewendet wird.

4. Verfahren nach einem der Ansprüche 1 bis 3, **dadurch gekennzeichnet, dass** die Vertauschungen statistisch unabhängig sind.

5. Verfahren nach einem der Ansprüche 1 bis 4, **dadurch gekennzeichnet, dass** mindestens eine kryptographische Blockverschlüsselungsoperation einen Schritt des Verkettens der Dateneinheitenteile beinhaltet.

6. Verfahren nach einem der Ansprüche 1 bis 5, **dadurch gekennzeichnet, dass** mindestens eine kryptographische Blockverschlüsselungsoperation eine Nachschlagetabelle für jedes Dateneinheitenteil verwendet, deren Eingabeseite den Teil der zwei vertauschten Dateneinheiten empfängt und den Teil einer Ausgabedateneinheit bereitstellt.

**7.** Verfahren nach einem der Ansprüche 1 bis 6, **dadurch gekennzeichnet, dass** mindestens eine kryptographische Blockverschlüsselungsoperation, die auf die vertauschten Dateneinheiten angewendet wird, eine Exklusiv-ODER-Operation beinhaltet.

**8.** Verfahren nach einem der Ansprüche 1 bis 7, **dadurch gekennzeichnet, dass** mindestens eine kryptographische Blockverschlüsselungsoperation, die auf die vertauschten Dateneinheiten angewendet wird, ein Verschlüsselungsalgorithmus ist.

**9.** Verfahren nach einem der Ansprüche 1 bis 8, **dadurch gekennzeichnet, dass** mindestens eine kryptographische Operation, die auf die vertauschten Dateneinheiten angewendet wird, ein AES-Verschlüsselungsalgorithmus ist.

**10.** Vorrichtung (40) für eine kryptographische Blockverschlüsselungsverarbeitung, die Folgendes beinhaltet:

- ein Zerlegungsmittel, das dazu ausgelegt ist, jede von zwei Dateneinheiten in Dateneinheitenteile zu zerlegen, wobei jedes Dateneinheitenteil eine Vielzahl von elementaren Dateneinheiten beinhaltet,
- ein Vertauschungsmittel, das angepasst ist, innerhalb jedes Dateneinheitenteils elementare Dateneinheiten dieses Dateneinheitenteils zu vertauschen, und
- mindestens ein Operationsmittel, das angepasst ist, durch Kombinieren von entsprechenden vertauschten Dateneinheitenteilen der zwei vertauschten Dateneinheiten mindestens eine kryptographische Blockverschlüsselungsoperation an den vertauschten Dateneinheiten durchzuführen,

**dadurch gekennzeichnet, dass** das Vertauschungsmittel angepasst ist, unterschiedliche Vertauschungen bei entsprechenden Dateneinheitenteilen der zwei Dateneinheiten vorzunehmen, um die entsprechenden vertauschten Dateneinheitenteile der zwei vertauschten Dateneinheiten zu erhalten, wodurch auf jede der zwei Dateneinheiten eine andere Vertauschung (P, P*) angewendet wird.

**11.** Vorrichtung (40) nach Anspruch 10, die eine elektronische Tascheneinheit, wie etwa eine Mikroschaltungskarte, konstituiert.

**12.** Vorrichtung (40) nach Anspruch 11, die die Norm ISO 7816 erfüllt.

**Revendications**

**1.** Procédé basé sur un processeur de traitement cryptographique de cryptage de blocs, qui comporte les étapes suivantes :

- décomposer (305) chacune de deux unités de données en parties d'unités de données, chaque partie d'unités de données comportant une pluralité d'unités de données élémentaires,
- permuter (104, 205, 320), à l'intérieur de chaque partie d'unités de données, des unités de données élémentaires de cette partie d'unités de données, et
- réaliser au moins une opération cryptographique de cryptage de blocs (220, 350) sur les unités de données permutées en combinant des parties d'unités de données permutées correspondantes des deux unités de données permutées,

**caractérisé en ce que**, avant de réaliser ladite opération cryptographique de cryptage de blocs, l'étape de permutation comporte la réalisation de différentes permutations de parties d'unités de données correspondantes des deux unités de données, afin d'obtenir lesdites parties d'unités de données permutées correspondantes des deux unités de données permutées, appliquant ainsi une permutation différente (P, P*) à chacune desdites unités de données.

**2.** Procédé selon la revendication 1, **caractérisé en ce que** l'étape de permutation comporte :

- une première étape de permutation (104) pendant laquelle la même permutation (P) est appliquée aux différentes unités de données, afin d'obtenir des unités de données permutées, et
- une deuxième étape de permutation (205) pendant laquelle différentes permutations (P, P*) sont appliquées aux différentes unités de données permutées.

**3.** Procédé selon la revendication 1 ou 2, **caractérisé en ce que** l'étape de permutation comporte :

- une première étape (104) de permutation des unités de données pendant laquelle une première permutation est appliquée à une première partie de chacune des unités de données, afin d'obtenir des premières parties permutées, et une deuxième permutation, différente de la première permutation, est appliquée à une deuxième partie de chacune des unités de données afin d'obtenir des deuxième parties permutées, les première et deuxième permutations étant différentes, et
- une deuxième étape de permutation (205) pendant laquelle la deuxième permutation est appliquée après la permutation inverse de la première permutation de la première partie permutée de l'une des unités de données, et la première permutation après la permutation inverse de la deuxième permutation est appliquée à la deuxième partie permutée de ladite une des unités de données.

4. Procédé selon l'une quelconque des revendications 1 à 3, **caractérisé en ce que** lesdites permutations sont statistiquement indépendantes.

5. Procédé selon l'une quelconque des revendications 1 à 4, **caractérisé en ce qu'**au moins une opération cryptographique de cryptage de blocs comporte une étape de concaténation des parties d'unités de données.

6. Procédé selon l'une quelconque des revendications 1 à 5, **caractérisé en ce qu'**au moins une opération cryptographique de cryptage de blocs utilise une table à consulter pour chaque partie d'unités de données, dont le côté entrée reçoit ladite partie de deux unités de données permutées et fournit une unité de données de sortie à ladite partie.

7. Procédé selon l'une quelconque des revendications 1 à 6, **caractérisé en ce qu'**au moins une opération cryptographique de cryptage de blocs appliquée aux unités de données permutées comporte une opération ou-exclusif.

8. Procédé selon l'une quelconque des revendications 1 à 7, **caractérisé en ce qu'**au moins une opération cryptographique de cryptage de blocs appliquée aux unités de données permutées est un algorithme de cryptage.

9. Procédé selon l'une quelconque des revendications 1 à 8, **caractérisé en ce qu'**au moins une opération cryptographique appliquée aux unités de données permutées est un algorithme de cryptage AES (norme de chiffrement avancé).

10. Dispositif (40) de traitement cryptographique de cryptage de blocs, qui comporte :

　　- des moyens de décomposition configurés pour décomposer chacune de deux unités de données en parties d'unités de données, chaque partie d'unités de données comportant une pluralité d'unités de données élémentaires,
　　- des moyens de permutation adaptés pour permuter, à l'intérieur de chaque partie d'unités de données, des unités de données élémentaires de cette partie d'unités de données, et
　　- au moins un moyen d'opération adapté pour réaliser au moins une opération cryptographique de cryptage de blocs sur les unités de données permutées en combinant des parties d'unités de données permutées correspondantes des deux unités de données permutées,

**caractérisé en ce que** les moyens de permutation sont adaptés pour effectuer différentes permutations sur des parties d'unités de données correspondantes des deux unités de données afin d'obtenir lesdites parties d'unités de données permutées correspondantes des deux unités de données permutées, appliquant ainsi une permutation différente (P, P*) à chacune desdites unités de données.

11. Dispositif (40) selon la revendication 10, qui constitue une unité électronique de poche telle qu'une carte à microcircuit.

12. Dispositif (40) selon la revendication 11, qui est conforme à la norme ISO 7816.

Figure 1

Figure 2

Message X

$\downarrow$

| Obtain random data units | — 101 |

$\downarrow$

| Generate permutation P | — 102 |

$\downarrow$

| Apply permutation P | — 104 |

10 to 14
rounds

SubByte — 110

$\downarrow$

ShiftRows — 120

$\downarrow$

MixColumns — 130

Calculate tables $XT_4^1$ and $XT_4^2$ — 131

$\downarrow$

Calculate XOR — 132

$\downarrow$

Calculate $D_2$ — 134

$\downarrow$

Multiplication modulo $X^4+1$ — 136

$\downarrow$

AddRoundKey — 140

Calculate $XT_8$ — 145

Randomized AES coding

$\downarrow$

Inverse permutation $P^{-1}$ — 150

$\downarrow$

Encrypted message Y

Figure 3

Message X

Obtain random data units — 101

Generate permutations P and P* — 102

Apply permutation P — 104

Randomized AES coding

Calculate v* = P* o P$^{-1}$(v) — 205

Calculate tables XT$_4^1$ and XT$_4^2$ — 207

Process q$_l$ — 210

Process q$_h$ — 215

Calculate XT8 = q$_h$ || q$_l$ — 220

Inverse permutation P$^{-1}$ — 150

Encrypted message Y

# Figure 4

| | |
|---|---|
| Decompose data units into data unit parts | 305 |
| Different permutations of the data units | 320 |
| Cryptographic operations on the permutated data units | 350 |

Figure 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0203605 A

**Non-patent literature cited in the description**

- Towards Sound Approaches to Counteract Power-Analysis Attacks. **SURESH CHARI ; CHARANTJIT S. JUTLA ; JOSYULA R. RAO ; PANKAJ ROHATGI.** Proceedings of Advances in Cryptology - CRYPTO'99. Springer-Verlag, 1999, 398-412

- A new DPA countermeasure based on permutation tables" in "Security and cryptography for networks", 6th international conference SCN 2008. **J.-S. CORON.** Lecture Notes in Computer Science. Springer, 2008, vol. 5229, 278, , 292